## Europäisches Patentamt
## European Patent Office
## Office européen des brevets

(19)

(11) Veröffentlichungsnummer: **0 048 391**
**B1**

(12) **EUROPÄISCHE PATENTSCHRIFT**

(45) Veröffentlichungstag der Patentschrift: **03.04.85**

(21) Anmeldenummer: **81107081.2**

(22) Anmeldetag: **09.09.81**

(51) Int. Cl.⁴: **C 08 G 81/02, C 08 G 65/48, C 08 L 25/04, C 08 L 71/04, C 08 L 51/00**

(54) Verfahren zur Herstellung von Polyphenylenäthergruppen enthaltenden Polymeren.

(30) Priorität: **20.09.80 DE 3035587**

(43) Veröffentlichungstag der Anmeldung:
**31.03.82 Patentblatt 82/13**

(45) Bekanntmachung des Hinweises auf die Patenterteilung:
**03.04.85 Patentblatt 85/14**

(84) Benannte Vertragsstaaten:
**BE DE FR GB IT NL**

(56) Entgegenhaltungen:
**DE-A-2 505 329**
**DE-A-2 713 509**
**US-A-3 375 228**
**US-A-4 221 881**

**Patent Abstracts of Japan, Band 1, Nr. 91, 24. August 1977, Seite 1994C77**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Brandstetter, Franz, Dr.**
**Ritterbuechel 45**
**D-6730 Neustadt (DE)**
Erfinder: **Hambrecht, Juergen, Dr.**
**An der Steige 12**
**D-6903 Neckargemuend (DE)**
Erfinder: **Naarmann, Herbert, Dr.**
**Haardtblick 15**
**D-6719 Wattenheim (DE)**
Erfinder: **Schuster, Hans, Dr.**
**Luitpoldstrasse 166**
**D-6700 Ludwigshafen (DE)**

# 0 048 391

**Description**

Die Erfindung betrifft ein Verfahren zur Herstellung von Polyphenylenethergruppen enthaltenden Polymeren sowie thermoplastische Formmassen, die derartige Polymere enthalten und die Verwendung dieser Polymeren zur Herstellung thermoplastischer Formmassen.

Thermoplastische Massen, die sich zur Herstellung von Formteilen eignen, die Styrolpolymerisate und Polyphenylenether enthalten, sind z.B. aus den US-Patentschriften 3 383 435, 4 128 602 sowie 4 128 603 bekannt. Solche Formmassen eignen sich zur Herstellung von Formteilen, die im Vergleich zu den Styrolpolymerisaten eine verbesserte Wärmeformbeständigkeit haben. Es ist außerdem bekannt, daß zur Qualitätsverbesserung der Polyphenylenether die freien phenolischen Hydroxylgruppen blockiert werden müssen. Dies kann z.B. durch Verätherung oder Veresterung bei der Herstellung der Polyphenylenether oder bei deren Verarbeitung erfolgen (US—PS 3 375 228, DE—OS 28 22 434, 28 22 856 und 28 22 857). Häufig ist es zur Einstellung bestimmter Materialeigenschaften erstrebenenswert, Polyphenylenether mit relativ hohen Molekulargewichten in den Formmassen zu verwenden. Es hat sich gezeigt, daß durch Verlängerung der Reaktionszeit bei der Herstellung von Polyphenylenethern mit höheren Molekulergewichten häufig unerwünschte Verzweigungen sowie die Bildung von unerwünschten Nebenprodukten auftritt. Dies führt zu einer Beeinträchtigung der Materialeigenschaften.

Der Erfindung liegt daher die Aufgabe zugrunde, ein Verfahren zur Herstellung von Polyphenylenethergruppen enthaltenden Polymeren zu schaffen, die die Nachteile bekannter Polyphenylenether nicht haben.

Gegenstand der Erfindung ist daher ein Verfahren zur Herstellung von Polyphenylenethergruppen enthaltenden Polymeren, durch Umsetzen von Polyphenylenethern, die endständige phenolische Hydroxylgruppen enthalten, mit reaktiven Kupplungsmitteln, wobei man Polyphenylenether, die eine Grenzviskosität, gemessen in Chloroform, von größer als 0,01 dl/g haben mit multifunktionellen Copolymeren umsetzt, die Styrol und/oder kern- oder seitenkettenalkylierte Styrole und/oder Ester der Acryloder Methacrylsäure mit Monoalkoholen, die 1 bis 6 C-Atome aufweisen, und Anhydrid-, Säure- oder Säurechlorid-Gruppen enthalten, welche Copolymeren ein Molekulargewicht zwischen 500 und 20.000 haben.

Ein weiterer Gegenstand der Erfindung sind thermoplastische Formmassen, die Styrolpolymerisate und ein solches Umsetzungsprodukt enthalten.

Die Polyphenylenether, die sich für das Verfahren eignen, sind Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 10 Einheiten miteinander verknüpft sein. Die Polyether können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)ether, Poly(2,6-diphenyl-1,4-phenylen)ether, Poly(2,6-dimethoxy-1,4-phenylen)ether, Poly-(2,6-dimethyl-1,4-phenylenether, Poly(2,6-dibrom-1,4-phenylen)ether. Bevorzugterweise wird der Poly(2,6-dimethyl-1,4-phenylen)ether eingesetzt. Die Polyphenylenether können z.B. in Gegenwart von komplexbildenden Mitteln wie Kupferbromid und sek.-Dibutylamin aus den Phenolen hergestellt werden.

Voraussetzung für das Verfahren ist, daß die Polyphenylenether freie phenolische Hydroxylgruppen enthalten. Die Polyether haben eine Grenzviskosität, gemessen bei 30°C in Chloroform, von größer als 0,01, vorzugsweise zwischen 0,2 bis 0,4 dl/g.

Die Polyphenylenether werden mit den obengenannten Copolymerisaten umgesetzt. Diese Copolymerisate sind multifunktionelle Kupplungsmittel, so daß durch die Umsetzung mit den Polyphenylenethern sternförmige bzw. kammförmige Polymere entstehen, die Polyethergruppen enthalten. Bevorzugt verwendet man für das Verfahren Copolymerisate aus 90 bis 30% Styrol, 1 bis 50% Maleinsäureanhydrid bzw. Acryl-bzw. Methacrylsäure oder die Säurechloride dieser Säuren. Es können aber auch 1 bis 50 Gew.% Ester der Acryl- oder Methacrylsäure mit Monoalkoholen, die 1 bis 6 C-Atome enthalten, verwendet werden. Die Copolymerisate können außerdem noch 0 bis 30 Gew.% andere olefinisch ungesättigte Monomere, die mit den obengenannten Monomeren Copolymerisate bilden, enthalten. Solche Monomere sind z.B. Acrylnitril, Methacrylnitril, N-Vinylpyrrolidon, Acrylamid, Methacrylamid, Acrolein und Allylalkohol. Auch können -Olefine, wie Isobutylen, Diisobuten und Triisobuten eingesetzt werden.

In den Copolymerisaten addieren sich die Prozente zu 100 Prozent. Die Polymerisate sollen dabei so ausgebildet sein, daß pro Molekül mindestens 2, vorzugsweise mindestens 4 reaktionsfähige Gruppen enthalten sind. Die Molekulargewichte der Copolymerisate liegen im allgemeinen zwischen 500 und 20 000 (osmometrisch gemessen in Aceton 1 bis 5 Gew.%). Vorzugsweise liegen die Molekulargewichte im Bereich von 500 bis 7 000, insbesondere zwischen 800 und 2 000. Die Herstellung dieser multifunktionellen Polymerisate ist bekannt. Sie wird vorzugsweise durch radikalische Polymerisation der Monomeren in Lösung oder Masse vorgenommen.

Die Umsetzung der phenolische Hydroxylgruppen enthaltenden Polyphenylenether mit den multifunktionellen Styrolpolymrisation kann in Substanz oder in Lösung bzw. in Gegenwart von anderen Styrolpolymerisaten, die sich als Mischungskomponente für Formmassen eignen, erfolgen. Die Umsetzung wird im allgemeinen bei Temperaturen zwischen 250 und 350°C, vorzugsweise bei 280 bis 320°C vorgenommen. Da sich die erfindungsgemäß hergestellten Polyphenylenethergruppen ent-

2

0 048 391

haltenden Polymeren insbesondere zur Herstellung von thermoplastischen Formmassen eignen, die Styrolpolymerisate enthalten, wird die Umsetzung der Polyphenylenether mit den multifiunktionellen Styrolcopolymerisaten vorzugsweise in Gegenwart des Styrolpolymerisates vorgenommen, das die Formmasse bilden soll. Zweckmäßig werden die Komponenten in Mischvorrichtungen wie Ein- oder Zweiwellenextrudern oder Walzen, wie sie üblicherweise zum Mischen hochmolekularer Verbindungen verwendet werden, vorgenommen.

Unter thermoplastischen Formmassen sollen ungeformte Mischungen verstanden werden, die sich durch thermoplastische Verarbeitung innerhalb bestimmter Temperaturbereiche zu Formteilen oder Halbzeug verarbeiten lassen. Die Formmassen können als Granulat vorliegen, sie können aber auch pulverförmig oder durch Tablettierung vorgeformt oder in Form von Platten oder Bahnen vorliegen.

Insbesondere eigenen sich solche thermoplastische Formmassen, die 5 bis 90 Gew.% eines Styrolpolymerisates und 95 bis 10 Gew.% des Polyphenylenethergruppen enthaltenden Umsetzungsproduktes enthalten. Bevorzugt sind Formmassen, die 20 bis 80 Gew.% schlagfest modifizierte Styrolpolymerisate und 80 bis 20 Gew.% des Polyphenylenethergruppen enthaltenden Umsetzungsproduktes enthalten.

Von den Styrolpolymerisaten, die in den thermoplastischen Formmassen enthalten sein können, eignen sich insbesondere Polystyrol oder schlagfest modifiziertes Polystyrol. Es können aber auch Styrolpolymerisate mit bis zu 30 Gew.% anderer Monomerer, wie Acrylnitril oder Acrylester, Verwendung finden.

Die Herstellung der schlagfest modifizierten Polymerisate erfolgt nach bekannten Verfahren durch Polymerisation in Masse oder Lösung, z.B. nach einem Verfahren, wie es in der US—PS 2 694 692 oder nach einem Masse-Suspensions-Verfahren, wie es z.B. in der US—PS 2 862 906, beschrieben ist.

Als monovinylaromatische Verbindungen kommen dabei insbesondere Styrol in Betracht, ferner die kern- oder seitenkettenalkylierten Styrole, wie z.B. α-Methylstyrol und Vinyltoluol. Die monovinylaromatischen Verbindungen können allein oder in Mischung miteinander eingesetzt werden. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Ein geeignete Kautschuk im Sinne der Erfindung ist z.B. Polybutadien.

Die Herstellung der schlagfest modifizierten Polymerisate mit dem gewünschten Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 30% in Masse unter Einwirkung von Scherkräften vorzupolymerisieren, diese Reaktionsmasse dann in Wasser zu suspendieren und anschließend auszupolymerisieren.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d.h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906, auf die wegen weiterer Einzelheiten verwiesen werden soll.

Es hat sich gezeigt, daß die nach dem erfindungsgemäßen Verfahren hergestellten Polyphenylenäthergruppen enthaltenden Polymeren im Vergleich zu Polyphenylenäthern vorteilhafte Eigenschaften als Mischungskomponente in Formmassen auf der Basis von Styrolpolymerisaten haben. So zeichnen sich z.B. solche Formmassen durch besonders hohe Schlagzähigkeit aus. Im übrigen haben solche Formmassen eine gute Wärmeformbeständigkeit sowie eine gute Verarbeitbarkeit.

Beispiele

1. Herstellung der reaktiven multifunktionellen Copolymerisate

Mischungen aus den in der Tabelle angegebenen Monomeren werden kontinuierlich einer Polymerisationseinrichtung zugeführt, die aus einem Druckkessel mit einem nachgeschalteten, mit statischen Mischelementen versehenen Druckrohr besteht. Die Polymerisation wird bei einer Temperatur von 280°C durchgeführt. Am Reaktorausgang wird das Copolymerisat abgezogen. Die durchschnittliche Verweilzeit der Monomeren in der Polymerisationszone beträgt 15 Minuten. Der Druck in der Polymerisationszone wird bei 25 der gehalten.

Die restlichen Monomeren werden aus der Polymerisatschmelze bei einem Druck von 5—20 Torr (6,65—2,66 mbar) und Temperaturen zwischen 150°C und 200°C in einer Entgasungsvorrichtung entfernt.

3

**0 048 391**

2. Umsetzung der Copolymerisate mit dem Polyäther und Herstellung der thermoplastischen Formmassen

Die in der Tabelle angegebenen Gewichtsteile der multifunktionellen Copolymerisate sowie von Poly(2,6-dimethyl-1,4-phenylen)äther werden in einem Fluidmischer mit jeweils 0,8 Gewichtsteilen Tris-(nonylphenyl)phosphit und 1,5 Gewichtsteilen Polyäthylen innig vermischt. Dieses Gemisch wird zusammen mit den in der Tabelle angegebenen Gewichtsteilen an Polystyrol, auf einem Zweiwellenextruder bei 280°C aufgeschmolzen, homogenisiert und anschließend granuliert. Unter diesen Bedingungen erfolgt die Umsetzung der Hydroxyl-Endgruppen des Polyäthers mit dem Copolymerisat.

Aus diesen Mischungen werden auf einer Spritzgußmaschine bei 280°C Prüfkörper hergestellt. Die Brucharbeit wurde nach DIN 53 443. Blatt 1 bei 23°C ermittelt. Die Erweichungspunkte wurden nach Vicat gemäß DIN 53 460/B bestimmt.

TABELLE

| Bei-spiel | Poly-styrol [Gew-Tle] | Poly(2,6-di-methyl-1,4-phenylen)ether [Gew-Tle] | Grenz-visko-sität [dl/g] | Reaktive copolymere Monomeren-zusammensetzg. [Gew-%] | [Gew-Tle] | $M_n$ osmometr. | Bruch-arbeit (Nm) | Erwei-chungspunkt nach [°C] |
|---|---|---|---|---|---|---|---|---|
| 1 | 75[1] | 23 | 0,43 | S (70) MSA (30) | 2 | 1400 | 0,8 | 114 |
| 2 | 50[1] | 48 | 0,43 | S (70) MSA (30) | 2 | 1400 | 1,1 | 137 |
| 3 | 30[1] | 68 | 0,43 | S (70) MSA (30) | 2 | 1400 | 1,4 | 161 |
| 4 | 60[1] | 39 | 0,43 | S (60) AS (10) MSA (30) | 1 | 1700 | 0,9 | 132 |
| 5 | 60[1] | 39 | 0,43 | MMA (70) AS (10) t-BA (20) | 1 | 1100 | 1,0 | 129 |
| 6 | 75[2] | 24 | 0,40 | S (60) MSA (40) | 1 | 1200 | 11 | 116 |
| 7 | 50[2] | 49 | 0,40 | S (60) MSA (40) | 1 | 1200 | 17 | 137 |
| 8 | 25[2] | 74 | 0,40 | S (60) MSA (40) | 1 | 1200 | 14 | 160 |
| 9 | 75[2] | 24 | 0,40 | S (55) AS (45) | 1 | 1300 | 12 | 116 |
| 10 | 75[2] | 23 | 0,33 | S (60) AS (5) MSA (35) | 2 | 1700 | 9 | 113 |
| 11 | 75[2] | 23,75 | 0,40 | S (60) AS (5) MSA (35) | 1,25 | 1700 | 11 | 117 |

| Bei-spiel | Poly-styrol [Gew-Tle] | Poly(2,6-di-methyl-1,4-phenylen)ether [Gew-Tle] | Grenz-visko-sität [dl/g] | Reaktive Copolymere | | | Bruch-arbeit (Nm) | Erwei-chungspunkt nach [°C] |
|---|---|---|---|---|---|---|---|---|
| | | | | Monomeren-zusammensetzg. [Gew-%] | [Gew-Tle] | $M_n$ osmometr. | | |
| 12 | 75[2] | 24 | 0,43 | S (60) AS (5) MSA (35) | 1 | 1700 | 11 | 118 |
| 13 | 75[2] | 24,5 | 0,43 | S (60) AS (5) MSA (35) | 0,5 | 1700 | 10 | 115 |
| 14 | 75[2] | 24,75 | 0,43 | S (60) AS (5) MSA (35) | 0,25 | 1700 | 9 | 116 |
| 15 | 60[2] | 39 | 0,43 | S (62,5) AS (14) MSA (23,5) | 1 | 1400 | 13 | 135 |
| 16 | 75[2] | 24 | 0,43 | S (70) AS (10) MSA (20) | 1 | 1900 | 11 | 117 |
| 17 | 60[2] | 39 | 0,43 | S (50) MMA (10) AS (10) MSA (30) | 1 | 1400 | 14 | 134 |
| 18 | 30[2] | 69 | 0,43 | S (65) t-BA (35) | 1 | 1100 | 19 | 158 |
| 19 | 75[2] | 24 | 0,51 | MMA (45) AS (20) MSA (35) | 1 | 1750 | 9 | 115 |
| 20 | 75[2] | 24 | 0,43 | MMA (55) t-BA (35) AS (10) | 1 | 1400 | 10 | 115 |

0 048 391

TABELLE FORTSETZUNG

| Bei-spiel | Poly-styrol [Gew-Tle] | Poly(2,6-di-methyl-1,4-phenylen)ether [Gew-Tle] | Grenz-visko-sität [dl/g] | Reaktive Copolymere Monomeren-zusammensetzg. [Gew-%] | [Gew-Tle] | $M_n$ osmometr. | Bruch-arbeit (Nm) | Erwei-chungspunkt nach [°C] |
|---|---|---|---|---|---|---|---|---|
| 21 | 75[2) | 24 | 0,51 | MMA (50) AN (10) AS (5) MSA (35) | 1 | 1550 | 11 | 116 |
| 22 | 75[2) | 24,5 | 0,51 | S (65) AN (15) MSA (20) | 1 | 2100 | 10 | 117 |
| 23 | 75[2) | 24,5 | 0,33 | S (60) BA (10) AS (5) MSA (25) | 1 | 1600 | 11 | 116 |
| 24 | 60[2) | 39 | 0,40 | S (70) AS-Cl (30) | 1 | 1100 | 12 | 135 |
| 25 | 75[2) | 24 | 0,43 | S (60) AN (10) AS-Cl (30) | 1 | 1450 | 10 | 114 |

| Bei-spiel | Poly-styrol [Gew-Tle] | Poly(2,6-di-methyl-1,4-phenylen)ether [Gew-Tle] | Grenz-visko-sität [dl/g] | Reaktive Copolymere | | $M_n$ osmometr. | Bruch-arbeit (Nm) | Erwei-chungspunkt nach [°C] |
|---|---|---|---|---|---|---|---|---|
| | | | | Monomeren-zusammensetzg. [Gew-%] | [Gew.-Tle] | | | |
| Vergleichsversuche (nicht erfindungsgemäß) | | | | | | | | |
| A | 75[2] | 25 | 0,43 | — | — | — | 0.2 | 118 |
| B | 60[2] | 40 | 0,43 | — | — | — | 0,2 | 133 |
| C | 75[2] | 25 | 0,43 | — | — | — | 4 | 105 |
| D | 60[2] | 40 | 0,43 | — | — | — | 7 | 130 |
| E | 30[2] | 70 | 0,43 | — | — | — | 12 | 158 |
| F | 75[2] | 25 | 0,33 | — | — | — | 2 | 103 |
| G | 75[2] | 25 | 0,40 | — | — | — | 3 | 105 |
| H | 75[2] | 25 | 0,51 | — | — | — | 5 | 106 |

[1] Standardpolystyrol ($M_w$=200 000)
[2] Schlagfestes Polystyrol mit 8 Gew.Tln. Polybutadien

Abkürzungen:
S=Styrol
AS=Acrylsäure
MSA=Maleinsäureanhydrid
MMA=Methacrylsäuremethylester

BA=Acrylsäure-n-butylester
t-BA=Acrylsäure-tert.-butylester
AN=Acrylnitril
AS-Cl=Acrylsäurechlorid.

# 0 048 391

**Patentansprüche**

1. Verfahren zur herstellung von Polyphenylenethergruppen enthaltenden Polymeren durch Umsetzen von Polyphenylenethern, die endständige phenolische Hydroxylgruppen enthalten mit reaktiven Kupplungsmitteln, dadurch gekennzeichnet, daß man Polyphenylenether, die eine Grensviskosität, gemessen bei 30°C in Chloroform, von größer als 0,01 dl/g haben, mit multifunktionellen Copolymeren umsetzt, die Styrol und/oder kern- oder seitenkettenalkylierte Styrole und/oder Ester der Acryl- oder Methacrylsäure mit Monoalkoholen, die 1 bis 6 C-Atomen aufweisen und Anhydrid-, Säure- oder Säurechloridgruppen enthalten, welche Copolymeren ein Molekulargewicht zwischen 500 und 20.000 haben.

2. Thermoplastische Formmassen, die Styrolpolymerisate und Polyphenylenether enthalten, dadurch gekennzeichnet, daß die Polyphenylenether Umsetzungsprodukte nach sind, die dem Verfahren gemäß Anspruch 1 hergestellt wurden.

**Revendications**

1. Procédé de préparation de polymères contenant des groupes poly(éther de phénylène) par réaction de poly(éthers de phénylène) à groupes hydroxyle phénoliques terminaux avec des agents de liaison, caractérisé en ce que l'on fait réagir des poly(éthers de phénylène) possédant une viscosité limite, mésurée dans le chloroforme à 30°C, supérieure à 0,01 dl/g, avec des copolymères multifonctionnels, contenant du styrène et(ou) des styrènes alkylés sur le noyau ou sur une chaîne latérale et(ou) des esters de l'acide acrylique ou méthacrylique et de monols en $C_1$ à $C_6$, ces copolymères possédant un poids moléculaire entre 500 et 20.000.

2. Matières à mouler thermoplastiques, contenant des polymères styréniques et des poly(éthers de phénylène), caractérisées en ce que les poly(éthers de phénylène) sont des produits préparés par le procédé selon la revendication 1.

**Claims**

1. A process for the production of polymers containing polyphenylene ether groups by reacting polyphenylene ethers, containing phenolic hydroxyl end groups, with reactive coupling agents, wherein the polyphenylene ethers, which have an intrinsic viscosity, measured in chloroform at 30°C, of more than 0.01 dl/g, are reacted with multifunctional copolymers containing units of styrene and/or nuclear-alkylated or side-chain-alkylated styrenes and/or esters of acrylic or methacryic acid with monoalcohols of 1 to 6 carbon atoms, and anhydride, acid or acid chloride groups, which copolymers have a molecular weight of from 500 to 20,000.

2. A thermoplastic moulding composition containing styrene polymers and polyphenylene ethers, wherein the polyphenylene ethers are reaction products which have been produced by the process as claimed in claim 1.

9